# EUROPÄISCHE PATENTANMELDUNG

(11) **EP 4 310 149 A1**
(43) Veröffentlichungstag der Anmeldung: **24.01.2024**
(21) Anmeldenummer: 23186619.5
(22) Anmeldetag: 20.07.2023
(51) Int. Cl.: C08L 83/04

(54) **BIODEGRADIERBARE POLYSILOXANE**

(30) Priorität: 21.07.2022 DE 102022118294
(71) Anmelder: Fraunhofer-Gesellschaft zur Förderung der angewandten Forschung e.V., 80686 München (DE)
(72) Erfinder: KUNTNER, Patricia, 97082 Würzburg (DE); LÖBMANN, Peer, 97082 Würzburg (DE); CLADE, Jürgen, 97082 Würzburg (DE); SCHOTTNER, Gerhard, 97082 Würzburg (DE)
(74) Vertreter: Maiwald GmbH

(57) **Zusammenfassung**

Die vorliegende Erfindung betrifft quervernetzte Polysiloxane mit organischen Verbrückungsgruppen Ver, ein Verfahren zur Herstellung dieser quervernetzten Polysiloxane, Mischungen, die diese Polysiloxane und Füllstoffe enthalten, ein Verfahren zur biobasierten Degradation dieser Polysiloxane, die Verwendung der organischen Verbrückungsgruppen Ver, deren Precursor nicht-endständige funktionelle Gruppen und/oder Heteroatome enthalten, in den quervernetzten Polysiloxanen zur biobasierten Degradation der quervernetzten Polysiloxane mittels eines biobasierten Agens und die Verwendung der quervernetzten Polysiloxane und der Mischung für industrielle Anwendungen.

## Beschreibung

Die vorliegende Erfindung betrifft quervernetzte Polysiloxane mit organischen Verbrückungsgruppen, ein Verfahren zur Herstellung dieser quervernetzten Polysiloxane, Mischungen, die diese Polysiloxane und Partikel enthalten, ein Verfahren zur biobasierten Degradation dieser Polysiloxane, die Verwendung der organischen Verbrückungsgruppen Ver, deren Precursor nicht-endständige funktionelle Gruppen und/oder Heteroatome enthalten, in den quervernetzten Polysiloxanen zur biobasierten Degradation der quervernetzten Polysiloxane mittels eines biobasierten Agens und die Verwendung der quervernetzten Polysiloxane und der Mischung für industrielle Anwendungen.

### Technischer Hintergrund

Bei Polysiloxanen (auch bekannt als Silicone) handelt es sich um polymere siliciumorganische Verbindungen, welche aus einem anorganischen Rückgrat aus alternierenden Silicium- und Sauerstoffatomen aufgebaut sind. An die Siliciumatome sind in der Regel zwei organische Reste direkt über Kohlenstoffatome gebunden. Aufgrund dieses Aufbaus zeichnen sich Polysiloxane durch herausragende, teilweise einzigartige Eigenschaften aus und grenzen sich gleichzeitig von anderen synthetischen Kunststoffen ab. Besondere Eigenschaften der Silicone sind beispielsweise ihre hohen thermischen Stabilitäten, aber auch eine hohe Lebensdauer ist kennzeichnend für diese Stoffklasse. Im Umkehrschluss bedeutet dies jedoch, dass Polysiloxane nicht biologisch abbaubar oder auch nur degradierbar sind. Polysiloxane kommen zudem nicht in der Natur vor, sondern es handelt sich um rein synthetisch hergestellte Stoffe.

Es sind einerseits biobasierte und andererseits biologisch abbaubare Polysiloxane voneinander zu unterscheiden. Als biobasierte Systeme gibt es unter anderem Polysiloxane in Kombination mit beispielsweise Polyestern, wobei es sich hier üblicherweise um Block-Copolymere handelt. Zu biologisch abbaubaren Polysiloxanen gibt es bisher noch keine beschriebene Problemlösung.

In der WO 2021/190737 A1 wird von Polyester-Polysiloxan-Copolymeren berichtet. Hierbei handelt es sich lediglich um Copolymere, bei denen alternierend Polyestermit Polysiloxan-Kettenabschnitten verknüpft sind. Zudem ist in diesem Patent das Konzept der (Bio)Degradation nicht zu finden.

Auch die WO 2022/019179 A1 berichtet von einen Copolymer aus Polyester-Organopolysiloxanen. Hier findet sich ebenfalls nicht das Konzept der (Bio-)Degradation. Die Degradierung funktioniert aufgrund der funktionellen Gruppen in den Partikeln in einer feuchten Umgebung. Die Erfinder des Patents WO 2022/019179 A1 schließen aufgrund der Polyester-Struktur in den Partikeln, dass eine Degradierung in der Umwelt stattfinden kann. Es handelt sich hier jedoch wiederum um ein Copolymer mit verhältnismäßig langen Polyester-Kettenabschnitten. Das gleiche gilt für die US 2020/362116 AA. Sie berichtet von einem Polysiloxan-Polyester-Blockcopolymer, wobei hier das Konzept der (Bio)Degradation keine Rolle spielt.

Die US 2016/160011 A1 beschreibt die Herstellung eines RTV-Silicons (RTV = Raumtemperatur-vernetzend), welches mit Hilfe von Feuchtigkeit aus der Umgebung als Katalysator reagiert. Zu diesem werden im Herstellungsprozess noch Stärke sowie ein weiteres Biopolymer, welches biologisch abbaubar ist, hinzugegeben. Es handelt sich hier jedoch um ein Polymer-Gemisch und die biologische Abbaubarkeit besteht nicht für die Siliconkomponente, sondern lediglich für den Stärkeanteil sowie weitere bereits bekannte biologisch abbaubare Biopolymere (in der Patentschrift werden beispielsweise Cellulose-Derivate genannt).

Ein hoher Anteil eines bereits bekannten biologisch abbaubaren Biopolymers liegt auch der CN 111286177 A zugrunde. In dem Kompositmaterial ist zwar ein geringer Anteil eines Polysiloxan-Polyimid-Copolymers zu finden (12 bis 16 Teile), jedoch wird die (Bio)Degradierung durch den hohen Anteil an PLA (PLA = Polymilchsäure; 80 bis 85 Teile) erreicht.

In der WO 2017/191603 A1 wird ein Copolymer aus PLA, welches als bioabbaubares Polymer bekannt ist, und Silicon beschrieben.

In der WO 2021/005267 A1 wird ein Hybridpolymer, vergleichbar mit ORMOCER^{®}en, behandelt. Es handelt sich dabei um ein Hybridpolymer-Komposit aus einem Metalloxan-Präpolymer / -Monomer und einem Biopolymer, wie beispielsweise PHB (PHB = Polyhydroxybutyrat). Aufgrund der Verwendung von Biopolymeren spielen in dieser Patentschrift die Konzepte biobasierte, recycelbare Polymere sowie Biodegradation eine Rolle. Allerdings werden hier Komposite unter Verwendung von Biopolymeren (also Makromolekülen) beschrieben.

Die US 2021253901 AA beschreibt verschiedenste Methoden für biodegradierbare Beschichtungen. Nach dieser Patenschrift wird Papier mit einem Reaktionsprodukt aus einem aminofunktionalisiertem Polymer (z.B. Chitosan) mit einem aminoreaktiven funktionalisiertem "omniphoben" Polymer (z.B. epoxidiertes PDMS) beschichtet. Die Biodegradierbarkeit wird hierbei durch bereits bekannte, biologische abbaubare Polymere, wie Chitosan, erreicht.

Die CN 113372594 A behandelt einen Blend, welcher aus PBAT (PBAT = Polybutylenadipat-terephthalat) basiertem degradierbaren Kunststoff besteht, welcher mit PE (PE = Polyethylen) und modifiziertem Polysiloxan gemischt wird. Die Aufgabe des Polysiloxans ist dabei die Kompatibilität zwischen PBAT und PE zu verbessern, d.h. es handelt sich hierbei um ein Polymergemisch und kein einheitliches Material.

In der CN112375343 A wird ein Kunststoff beschrieben, dessen Hauptbestandteil Polydiheptylsuccinat ist, wobei die Zugabe von Polysiloxanflüssigkeiten der Verlängerung der Lebensdauer des Kunststoffes dient. Es handelt sich also ebenfalls um ein Polymergemisch.

Die WO 2022/019179 A1 beschreibt Partikel, welche aus einem Copolymer aus Polyester und Organopolysiloxanen aufgebaut sind.

In der US 7,786,241 B2 wird ein Polysiloxan-Polyester beschrieben, welcher aus einem endständig mit einem Carbonsäureester substituierten Polysiloxan und einem Carbinol-terminierten Silicon durch Umesterung hergestellt wird. Die Anmelder des Patents US 7,786,241 B2 argumentieren, dass durch den Esteranteil die Biodegradation gesteigert wird. Bei den dort beschriebenen Polysiloxanen handelt es sich jedoch um Block-Copolymere, bei denen Ketten ohne Quervernetzungen in den Polysiloxan-Abschnitten vorliegen.

Im Stand der Technik sind nur unzureichende Lösungen bekannt, wie Polysiloxane durch biobasierte Degradation recycelt, abgebaut und kompostiert werden können. Die hier vorliegende Erfindung beruht auf der Grundidee der Verknüpfung von Polysiloxanketten mit kleinen molekularen Einheiten als Verbrückungsgruppen zu Polysiloxan-Netzwerken, welche einzelne Verknüpfungspunkte als "Sollbruchstellen" für eine biobasierte Degradation enthalten.

Die erfindungsgemäßen quervernetzen Polysiloxane lassen sich durch biobasierte Agentien wie Enzyme oder Mikroorganismen durch Angriff und Abbau der Verknüpfungsmoleküle in ihre Ausgangssubstanzen degradieren, die dann für weitere Anwendungen zur Verfügung stehen.

### Zusammenfassung der Erfindung

Die vorliegende Erfindung betrifft quervernetzte Polysiloxane enthaltend folgendes allgemeines Strukturmerkmal 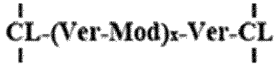 wobei
- CL: eine sog. "Crosslinker"-Einheit ist, die eine Polysiloxankette mit der Grundstruktur nach Formel (I) 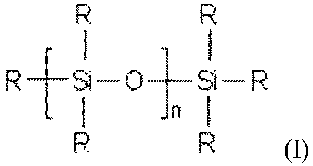 oder einen Polysiloxanring mit der Grundstruktur nach Formel (II) 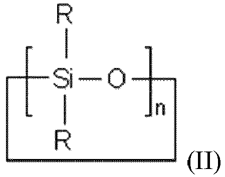 enthält, wobei
- R: unabhängig voneinander ausgewählt ist aus einem linearen, zyklischen oder verzweigten, aliphatischen oder aromatischen, gesättigten oder ungesättigten Kohlenwasserstoffrest mit 1 bis 20 C-Atomen, der gegebenenfalls Heteroatome ausgewählt aus O, N, S oder P enthält, -H oder -O-R',
- R': eine Polysiloxankette oder ein Polysiloxanring mit der Grundstruktur nach Formel (I) bzw. Formel (II) ist, und
- n: im Falle von Polysiloxanketten nach Formel (I) ein Zahlenwert von 0 bis 1000000, im Falle von Polysiloxanringen nach Formel (II) ein Zahlenwert von 2 bis 1000000 ist,
- Ver: und der Precursor jeder CL-Einheit drei oder mehr funktionelle Gruppen enthält, die kovalente Bindungen mit endständigen funktionellen Gruppen von Precursoren von Verbrückungsgruppen Ver ausbildet; eine organische Verbrückungsgruppe ist, deren Precursor(en) funktionelle Gruppen und/oder Heteroatome sowie mindestens zwei endständige funktionelle Gruppen enthalten, wobei die mindestens zwei endständigen funktionellen Gruppen mit je einer funktionellen Gruppe eines Crosslinker-Precursors oder einer funktionellen Gruppe eines Modifier-Precursors, falls vorhanden, jeweils eine kovalente Bindung ausbildet;
- Mod: eine oder mehrere Modifier-Gruppe ist, deren Precursor(en) Siloxane oder Polysiloxane sind, die zwei endständige funktionelle Gruppen enthalten, die mit je einer endständigen funktionellen Gruppe der Verbrücker-Precursor(en) jeweils eine kovalente Bindung ausbilden; und
- x: ein Zahlenwert von 0 bis 20 ist.

Weiterhin betrifft die vorliegende Erfindung ein Verfahren zur Herstellung der quervernetzten Polysiloxane wie hierin beschrieben, enthaltend die folgenden Schritte:
- Bereitstellen eines oder mehrerer Polysiloxane mit Polysiloxanketten oder Polysiloxanringen, welche als Crosslinker-Einheit CL fungieren, mit der Grundstruktur nach Formel (I) bzw. Formel (II);
- Bereitstellen eines oder mehrerer Precursoren des/der organischen Verbrückungsgruppen Ver;
- Optional Bereitstellen eines oder mehrerer Precursoren des/der Modifier-Gruppen Mod;
- Optional kovalente Verknüpfung einer endständigen funktionellen Gruppe von einem oder mehreren Precursoren von Ver mit einer funktionellen Gruppe von einem oder mehreren Precursoren von Mod in der Gegenwart eines Katalysators oder mehrerer Katalysatoren und optional in Gegenwart eines oder mehrerer Inhibitoren zur Herstellung der optionalen Struktur (Ver-Mod)ₓ-Ver;
- Kovalente Verknüpfung von jeweils einer funktionellen Gruppe der Precursor(en) der Crosslinker-Einheit CL, mit je einer endständigen funktionellen Gruppen der Precursor(en) von Ver und/oder optional von (Ver-Mod)ₓ-Ver in der Gegenwart eines Katalysators oder mehrerer Katalysatoren und optional in Gegenwart eines oder mehrere Inhibitoren.

Zudem betrifft die vorliegende Erfindung eine Mischung, enthaltend quervernetzte Polysiloxane wie hierin beschrieben und Füllstoffe, wie beispielsweise Partikel, Fasern, Fasermatten, Flakes, Additive, Katalysatoren und Mischungen daraus.

Des Weiteren betrifft die vorliegende Erfindung ein Verfahren zur biobasierten Degradation der quervernetzten Polysiloxane wie hierin beschrieben enthaltend folgende Schritte:
- Bereitstellen eines quervernetzten Polysiloxans wie hierin beschrieben;
- Mischen des quervernetzten Polysiloxans mit einem biobasierten Agens, das das quervernetzte Polysiloxan mindestens an der Stelle der funktionellen Gruppen und/oder Heteroatome des/der ein oder mehreren organische Verbrückungsgruppen Ver spaltet.

Weiterhin betrifft die vorliegende Erfindung die Verwendung von einer oder mehreren organischen Verbrückungsgruppen Ver, deren Precursor(en) eine oder mehrere nicht-endständige funktionelle Gruppen und/oder Heteroatome und mindestens zwei endständige funktionelle Gruppen enthalten, in dem quervernetzten Polysiloxan wie hierin beschrieben zur biobasierten Degradation des quervernetzten Polysiloxans mittels eines biobasierten Agens, wie Mikroorganismen, vorzugsweise Bakterien, Pilzen oder Algen, oder Enzymen außerhalb lebender Organismen.

Schließlich betrifft die vorliegende Erfindung die Verwendung Anwendungen der quervernetzten Polysiloxane und der Mischung wie hierin beschrieben für industrielle Anwendungen, wie in der chemischen Industrie, Kautschuk- und Kunststoffindustrie, Bauindustrie, Automobilsektor, Elektro- und Elektronikindustrie, Papierindustrie, und anderen.

### Definitionen

Biologisch abbaubare Polymere sind Polymere, die durch Mikroorganismen, wie Bakterien oder Pilze, mittels Enzymen unter geeigneten Bedingungen beispielsweise in CO₂, Wasser, anorganische Komponenten wie SiO₂ sowie Biomasse zersetzt werden. Die entsprechenden Bedingungen sind in Normen definiert wie beispielsweise der EU-Norm EN 13432 oder der US-Norm ASTM 6400. Zum vollständigen biologischen Abbau kann es in vier Schritten kommen: 1. biologischer Zerfall, 2. Depolymerisation, 3. Assimilation, 4. Mineralisation.

"Biobasiert" bedeutet auf Basis biologischer Agentien. Hierunter fallen in der Natur vorkommende Agentien wie nachwachsende Rohstoffe oder Mikroorganismen. Beispiele sind biobasierte Polymere wie Celluloseacetat, das aus Cellulose gewonnen wird, oder biobasierte Katalysatoren wie Enzyme, die beispielsweise aus Mikroorganismen oder Zellkulturen extrahiert werden.

"Degradation" in Sinne der vorliegenden Erfindung bedeutet ein chemisch oder biologisch induzierter Zerfall einer Molekülverbindung, in diesem Fall der erfindungsgemäßen quervernetzten Polysiloxane. Neben einem vollständigen biologischen Zerfall (bis zum Schritt der Mineralisation) können auch bereits im ersten Schritt des biologischen Zerfalls kleinere Einheiten der Molekülverbindungen gewonnen werden, welche wiederum recycelt und zur Herstellung neuer Produkte wiederverwendet werden können.

### Ausführliche Beschreibung der Erfindung

### Quervernetzte Polysiloxane

In einem ersten Aspekt betrifft die vorliegende Erfindung quervernetzte Polysiloxane enthaltend folgendes allgemeines Strukturmerkmal 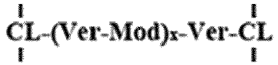 wobei
- CL: eine sog. "Crosslinker"-Einheit ist, die eine Polysiloxankette mit der Grundstruktur nach Formel (I) 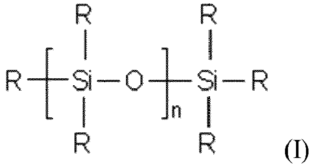 oder einen Polysiloxanring mit der Grundstruktur nach Formel (II) 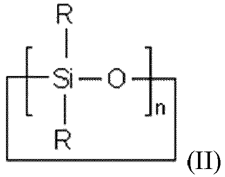 enthält, wobei
- R: unabhängig voneinander ausgewählt ist aus einem linearen, zyklischen oder verzweigten, aliphatischen oder aromatischen, gesättigten oder ungesättigten Kohlenwasserstoffrest mit 1 bis 20 C-Atomen, der gegebenenfalls Heteroatome ausgewählt aus O, N, S oder P enthält, -H oder -O-R',
- R': eine Polysiloxankette oder ein Polysiloxanring mit der Grundstruktur nach Formel (I) bzw. Formel (II) ist und
- n: im Falle von Polysiloxanketten nach Formel (I) ein Zahlenwert von 0 bis 1000000, im Falle von Polysiloxanringen nach Formel (II) ein Zahlenwert von 2 bis 1000000 ist, und der Precursor jeder CL-Einheit drei oder mehr funktionelle Gruppen enthält, die kovalente Bindungen mit endständigen funktionellen Gruppen von Precursoren von Verbrückungsgruppen Ver ausbildet;
- Ver: eine organische Verbrückungsgruppe ist, deren Precursor(en) funktionelle Gruppen und/oder Heteroatome sowie mindestens zwei endständige funktionelle Gruppen enthalten, wobei die mindestens zwei endständigen funktionellen Gruppen mit je einer funktionellen Gruppe eines Crosslinker-Precursors oder einer funktionellen Gruppe eines Modifier-Precursors, falls vorhanden, jeweils eine kovalente Bindung ausbildet;
- Mod: eine oder mehrere Modifier-Gruppe ist, deren Precursor(en) Siloxane oder Polysiloxane sind, die zwei endständige funktionelle Gruppen enthalten, die mit je einer endständigen funktionellen Gruppe der Verbrücker-Precursor(en) jeweils eine kovalente Bindung ausbilden; und
- x ein: Zahlenwert von 0 bis 20 ist.

Eine Crosslinker-Einheit CL enthält unabhängig voneinander eine Polysiloxankette oder einen Polysiloxanring mit der Grundstruktur nach Formel (I) bzw. Formel (II).

Generell weisen Polysiloxane folgende Siloxaneinheiten auf, die als mono-, di-, tri- oder tetrafunktional und entsprechend als M, D, T oder Q bezeichnet werden. Die generelle Struktur dieser Siloxaneinheiten ist im Folgenden angegeben.

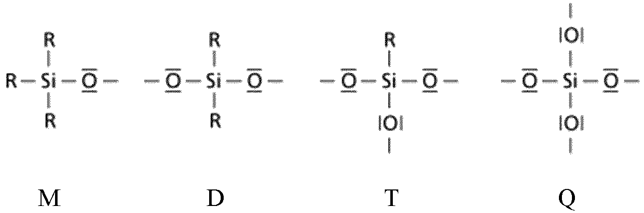

Die Polysiloxane der generellen Formel (I) bzw. (II) können lineare, cyclische, verzweigte oder bereits vernetzte Polysiloxane sein.

Lineare Polysiloxane (Polysiloxanketten) haben einen Aufbau aus Siloxaneinheiten nach dem Muster MDₘM und fallen üblicherweise als Öle an.

Cyclische Polysiloxane haben einen Aufbau aus Siloxaneinheiten nach dem Muster Dm.

Verzweigte Polysiloxane haben einen Aufbau aus Siloxaneinheiten nach dem Muster MₙDₘTₒQₚ. Die Verzweigungen werden dabei durch die tri- und/oder tetrafunktionalen Siloxaneinheiten T und/oder Q in die Polysiloxanketten eingefügt. In vernetzten Polysiloxanen sind lineare, verzweigte oder ringförmige Polysiloxane über eine große Anzahl von tri- und/oder tetrafunktionalen Siloxaneinheiten T und/oder Q zu zwei- oder dreidimensionalen Netzwerken verknüpft.

Der Rest R in der generellen Formel (I) bzw. (II) ist unabhängig voneinander ausgewählt aus einem linearen, zyklischen oder verzweigten, aliphatischem oder aromatischem, gesättigten oder ungesättigten Kohlenwasserstoffrest mit 1 bis 20 C-Atomen, der gegebenenfalls Heteroatome ausgewählt aus O, N, S oder P enthält, oder -H oder -O-R'.

Im Falle eines Kohlenwasserstoffrests ist R bevorzugt ein linearer oder verzweigter, stärker bevorzugt ein linearer Kohlenwasserstoffrest.

Weiterhin ist R in diesem Fall bevorzugt ein aliphatischer gesättigter oder ungesättigter, stärker bevorzugt ein gesättigter Kohlenwasserstoffrest. Vorzugsweise hat der Kohlenwasserstoffrest 1 bis 12 C-Atome, stärker bevorzugt 1 bis 8 C-Atome, noch stärker bevorzugt 1 bis 4 C-Atome.

Über Heteroatome wie O, N, S oder P können funktionelle Gruppen in den Kohlenwasserstoffrest eingefügt werden wie beispielsweise Estergruppen, Ethergruppen, Alkoxygruppen, Carboxygruppen, Acetoxygruppen, Aminogruppen, Amidogruppen, Iminogruppen, Oximgruppen, Glykosid-Gruppen, Urethan-Gruppen, Thiourethangruppen, Thioethergruppen oder Thiolgruppen.

In Formel (I) ist n ein Zahlenwert im Bereich von 0 bis 1000000, bevorzugt von 1 bis 5000, stärker bevorzugt von 5 bis 1000, noch stärker bevorzugt von 10 bis 500.

In Formel (II) ist n ein Zahlenwert im Bereich von 2 bis 1000000, bevorzugt von 4 bis 5000, stärker bevorzugt von 10 bis 1000, noch stärker bevorzugt von 20 bis 500.

In einer bevorzugten Ausführungsform sind die Polysiloxane lineare Polysiloxanketten der generellen Formel (I), wobei R unabhängig ausgewählt ist aus linearen gesättigten und gegebenenfalls ungesättigten Kohlenwasserstoffresten mit 1 bis 4 C-Atomen und -H.

Besonders bevorzugt sind Polydimethylsiloxan (PDMS), endständiges Dihydrogenpolydimethylsiloxan und/oder Hydrogenpolydimethylsiloxane mit Seitengruppen R = -H.

Die Precursoren für die Crosslinker-Einheiten CL enthalten drei oder mehr funktionelle Gruppen, die kovalente Bindungen zu den endständigen funktionellen Gruppen der Precursoren der Verbrückungsgruppen Ver ausbilden.

Dabei bildet eine funktionelle Gruppe Crosslinker-Einheiten CL eine kovalente Bindung mit einer endständigen funktionellen Gruppe eines Precursoren der Verbrückungsgruppe Ver.

Die Precursoren für die Crosslinker-Einheiten CL enthalten mindestens 3, beispielsweise 3 bis 10, vorzugsweise 3 bis 6 funktionelle Gruppen, die kovalente Bindungen zu den Precursoren von mindestens drei Verbrückungsgruppen Ver ausbilden.

In einer besonders bevorzugten Ausführungsform enthalten die Precursoren für die Crosslinker-Einheiten CL 3 funktionelle Gruppen, die kovalente Bindungen zu den Precursoren von mindestens drei Verbrückungsgruppen Ver ausbilden.

Die kovalente Bindung erfolgt hierbei über eine der mindestens zwei endständigen funktionellen Gruppen der Verbrückungsgruppen Ver.

Die ein oder mehrere funktionellen Gruppen der Precursoren für die Crosslinker-Einheiten CL sind vorzugsweise ausgewählt aus der Gruppe bestehend aus -Si-H-Gruppen, Hydroxy-Gruppen, Alkoxy-Gruppen, Carboxy-Gruppen, Epoxid-Gruppen, Isocyanat-Gruppen und Oxim-Gruppen. Besonders bevorzugt sind -Si-H Gruppen.

Die erfindungsgemäßen Polysiloxane enthalten ein oder mehrere, beispielsweise 1 bis 10, bevorzugt 1 bis 3 verschiedene, am stärksten bevorzugt jedoch nur eine Art von Crosslinker-Einheiten CL.

Der/die Precursor(en) des/der Crosslinker CL sind vorzugsweise ausgewählt aus der Gruppe der Hydrogenpolysiloxane.

Die Precursoren für die Crosslinker-Einheiten CL können entweder über die üblichen Polymerisationsreaktionen hergestellt werden oder sind käuflich erwerblich. Geeignet sind beispielsweise Polysiloxan-Crosslinker-Precursoren, wie beispielsweise Hydrogenpolydimethylsiloxane verschiedener Kettenlängen, die beispielsweise von Evonik Industries unter der Bezeichnung "Crosslinker 100/200 Serie" käuflich erwerblich sind.

Die erfindungsgemäßen Polysiloxane sind durch kovalente Bindungen zwischen Crosslinker-Einheiten CL, einer oder mehreren Verbrückungsgruppen Ver und gegebenenfalls einer oder mehrerer Modifier-Gruppen Mod aufgebaut.

Über eine oder mehrere Verbrückungsgruppen Ver und gegebenenfalls eine oder mehrere Modifier-Gruppen Mod ist die Quervernetzung zwischen den Crosslinker-Einheiten CL aufgebaut.

Wie oben diskutiert, kann das quervernetzte Polysiloxan zusätzlich zu den über die Verbrückungsgruppen eingeführten Quervernetzungen auch andere Quervernetzungen enthalten. Diese Quervernetzungen werden vorzugsweise durch die Verwendung bereits quervernetzter Polysiloxane in das quervernetzte Polysiloxan eingeführt.

Im Unterschied zu üblichen Quervernetzungen von Polysiloxanen wie aus dem Stand der Technik bekannt, besitzen die Verbrückungsgruppen Ver wie hierin beschrieben mindestens in ihren nicht-endständigen funktionellen Gruppen und/oder Heteroatomen Angriffspunkte zu Spaltung der Quervernetzungen des quervernetzten Polysiloxans.

Die erfindungsgemäßen Polysiloxane enthalten weiterhin ein oder mehrere, beispielsweise 1 bis 10, bevorzugt 1 bis 4, stärker bevorzugt 1 oder 2, am stärksten bevorzugt 2 Verbrückungsgruppen Ver pro Struktureinheit 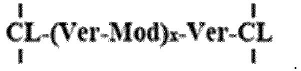 x ist ein Zahlenwert von 0 bis 20, bevorzugt 1 bis 20. Am stärksten bevorzugt ist x = 1.

Das/die Verbrückungsgruppen Ver sind organische Gruppen, deren Precursor(en) ein oder mehrere, beispielsweise 1 bis 10, bevorzugt 1 bis 4, stärker bevorzugt 1 oder 2, am stärksten bevorzugt 1 nicht-endständige funktionelle Gruppen und/oder Heteroatome enthalten.

Weiterhin enthalten die Precursor(en) der Verbrückungsgruppen Ver mindestens zwei, beispielsweise 2 bis 10, bevorzugt 2 bis 6, stärker bevorzugt 2 bis 4, am stärksten bevorzugt zwei endständige funktionelle Gruppen.

Durch zwei endständige funktionelle Gruppen der Precursor(en) der Verbrückungsgruppen Ver kann eine lineare Quervernetzung zwischen den Crosslinker-Einheiten CL in das erfindungsgemäße Polysiloxan eingeführt werden. Durch mehr als zwei endständige funktionelle Gruppen der Precursor(en) der Verbrückungsgruppen Ver wird eine verzweigte Quervernetzung zwischen den Crosslinker-Einheiten CL in das erfindungsgemäße Polysiloxan eingeführt. Bevorzugt ist eine lineare Quervernetzung.

Die endständigen funktionellen Gruppen des/der Precursor(en) von Ver müssen dazu geeignet sein mit jeweils einer funktionellen Gruppe des/der Precursor(en) der Crosslinker-Einheit CL und/oder einer funktionellen Gruppe des/der Precursor(en) der Modifier-Gruppe Mod, falls vorhanden, jeweils eine kovalente Bindung auszubilden.

Geeignete endständige funktionelle Gruppen sind vorzugsweise unabhängig voneinander ausgewählt aus der Gruppe bestehend aus linearen oder verzweigten ungesättigten Kohlenwasserstoffgruppen mit 2 bis 10 C-Atomen und endständiger C=C-Doppelbindung wie Vinylgruppen, Allylgruppen oder Vinylidengrupen, Alkoxy-Gruppen, Carboxy-Gruppen und Oxim-Gruppen.

Die nicht endständigen funktionellen Gruppen von Ver sind vorzugsweise ausgewählt aus der Gruppe bestehend aus Estern, Iminen, Ethern, Thioethern, Ketonen, Amiden, Urethanen, Thiourethanen und Glykosiden.

Die Heteroatome sind vorzugsweise ausgewählt aus der Gruppe bestehend aus Sauerstoff, Stickstoff, Schwefel und Phosphor.

Bevorzugte Precursoren für Ver sind beispielsweise Phthalsäure- oder Terephthalsäurediallylester, α,ω-ungesättigte Ester aus Fettsäure und Fettalkohol oder Phenolen aus etherischen Ölen wie z.B. Eugenol, Mono-, Di- oder allgemein Oligoethylenglycoldivinyl- oder -allylether und Diallylcarbonat.

Der/die Precursor(en) für die Verbrückungsgruppen Ver kann / können biobasiert, naturstoffbasiert oder auch synthetisch sein.

Die erfindungsgemäßen Polysiloxane können eine oder zwei oder mehr, beispielsweise 1 bis 10, bevorzugt 1 bis 4, stärker bevorzugt 1 oder 2 verschiedene Verbrückungsgruppen Ver, am stärksten bevorzugt 2 Verbrückungsgruppen Ver pro Netzbogen zwischen zwei CL-Einheiten enthalten.

In den erfindungsgemäßen Polysiloxanen können die Crosslinker-Einheiten CL entweder mit einzelnen Verbrückungsgruppen Ver oder mit Ketten aus Verbrückungs- und Modifiergruppen (Ver-Mod)ₓ-Ver vernetzt sein. Modifier-Gruppen Mod werden vorzugsweise eingesetzt, um die Kettenlänge der Netzbögen zu verlängern und so die Eigenschaften des vernetzten Polysiloxans zu verändern.

Der/die Precursor(en) des/der Modifier-Gruppen Mod sind vorzugsweise Polysiloxane mit zwei endständigen funktionellen Gruppen.

Die funktionellen Gruppen des Precursors des Modifiers sind vorzugsweise ausgewählt aus der Gruppe bestehend aus Si-H-Gruppen, Hydroxy-Gruppen, Alkoxy-Gruppen, Carboxy-Gruppen, Epoxid-Gruppen, Isocyanat-Gruppen, und Oxim-Gruppen.

Die erfindungsgemäßen Polysiloxane können keine oder eine oder mehr, beispielsweise 0 bis 10, bevorzugt 0 bis 4, stärker bevorzugt 0 oder 1 Modifier-Gruppen Mod, am stärksten bevorzugt eine Modifier-Gruppe Mod pro Netzbogen zwischen zwei CL-Einheiten enthalten.

Der Precursor jeder CL-Einheit bildet kovalente Bindungen zu mindestens drei, beispielsweise 3 bis 10, bevorzugt 3 bis 6, stärker bevorzugt 3 oder 4, am stärksten bevorzugt 3 Precursoren von Verbrückungsgruppen Ver aus. Dies bedeutet, dass jeder Precursor jeder CL-Einheit über mindestens 3, beispielsweise 3 bis 10, bevorzugt 3 bis 6, stärker bevorzugt 3 oder 4, am stärksten bevorzugt 3 kovalente Bindungen zu den Precursoren von Verbrückungsgruppen Ver Quervernetzungen zu anderen Precursoren von CL-Einheiten ausbildet.

### Verfahren zur Herstellung des erfindungsgemäßen quervernetzten Polysiloxans

In einem weiteren Aspekt betrifft die vorliegende Erfindung ein Verfahren zur Herstellung der quervernetzten Polysiloxane wie hierin beschrieben enthaltend die folgenden Schritte:
- Bereitstellen eines oder mehrerer Polysiloxane mit Polysiloxanketten oder Polysiloxanringen, welche als Crosslinker-Einheit CL fungieren, mit der Grundstruktur nach Formel (I) bzw. Formel (II);
- Bereitstellen eines oder mehrerer Precursoren des/der organischen Verbrückungsgruppen Ver;
- Optional Bereitstellen eines oder mehrerer Precursoren des/der Modifier-Gruppen Mod;
- Optional kovalente Verknüpfung einer endständigen funktionellen Gruppe von einem oder mehreren Precursoren von Ver mit einer funktionellen Gruppe von einem oder mehreren Precursoren von Mod in der Gegenwart eines Katalysators oder mehrerer Katalysatoren und optional in Gegenwart eines oder mehrerer Inhibitoren zur Herstellung der optionalen Struktur (Ver-Mod)ₓ-Ver;
- Kovalente Verknüpfung von jeweils einer funktionellen Gruppe der Precursor(en) der Crosslinker-Einheit CL, mit je einer endständigen funktionellen Gruppen der Precursor(en) von Ver und/oder optional von (Ver-Mod)ₓ-Ver in der Gegenwart eines Katalysators oder mehrerer Katalysatoren und optional in Gegenwart eines oder mehrerer Inhibitoren.

Dabei entsprechen die Polysiloxane enthaltend CL, Ver und Mod vorzugsweise allen Aspekten und Ausführungsformen der Polysiloxane, CL, Ver und Mod wie hierin beschrieben.

Der/die Katalysator(en) ist/sind vorzugsweise ausgewählt aus Katalysatoren für Hydrosilyierungsreaktionen, Katalysatoren für Kondensationsreaktionen von Alkoxy-haltigen Polysiloxanen, Katalysatoren für Kondensationsreaktionen von Carboxy-haltigen Polysiloxanen und Katalysatoren für Kondensationsreaktionen von Oxim-haltigen Polysiloxanen.

Bei den Katalysatoren handelt es sich bevorzugt um Edelmetallkatalysatoren, stärker bevorzugt Platinkatalysatoren.

Geeignete Edelmetallkatalysatoren, bevorzugt Platinkatalysatoren sind beispielsweise Karstedt-Katalysator, Ashby-Katalysator, Ossko-Katalysator und ähnliche.

Der/die Inhibitoren sind vorzugsweise ausgewählt geeigneten Inhibitoren für Hydrosilylierungsreaktionen, Kondensationsreaktionen von Alkoxy-haltigen Polysiloxanen, Kondensationsreaktionen von Carboxy-haltigen Polysiloxanen und Kondensationsreaktionen von Oxim-haltigen Polysiloxanen. Geeignete Inhibitoren sind beispielsweise Maleinsäuredimethylester, 1-Ethinyl-1-cyclohexanol, Inhibitor 600 aus der Produktlinie von Evonik Industries oder ähnliche. Derartige Inhibitoren sind für Siloxanpolymerisationen bekannt und können auch in dem erfindungsgemäßem Verfahren eingesetzt werden.

In einer Ausführungsform erfolgt die Ausbildung der Verbrückungsgruppe aus den Precursoren von Ver und gegebenenfalls Mod und deren kovalente Verknüpfung an die Precursoren von CL, in einem Reaktionsschritt. Hierzu werden vorzugsweise die entsprechenden Precursoren von CL, Ver und gegebenenfalls Mod und der/die Katalysatoren gemischt und in einer Eintopfreaktion reagieren gelassen.

Die Reaktionsmischung liegt vorzugsweise in flüssiger Form vor. Hierzu können die Ausgangssubstanzen in einem geeigneten Lösungsmittel wie beispielsweise Butylacetat oder Toluol gelöst werden.

Die Reaktion erfolgt üblicherweise bei einer Temperatur von 10 bis 100°C, bevorzugt von 20 bis 80°C, stärker bevorzugt von 35 bis 70°C.

Die Reaktionsdauer beträgt üblicherweise 1 Stunde bis 100 Stunden, bevorzugt 5 Stunden bis 80 Stunden, stärker bevorzugt von 12 Stunden bis 72 Stunden, noch stärker bevorzugt von 24 Stunden bis 60 Stunden.

Aufgrund der Quervernetzung härtet das entstehende quervernetzte Polysiloxan aus.

In einer weiteren Ausführungsform kann zunächst in einem ersten Schritt die Kettenlänge der Verbrückungsgruppe durch Reaktion der Precursoren von Ver und Mod eingestellt werden, bevor das so erhaltene Zwischenprodukt in einem zweiten Schritt mit den Precursoren von CL zum erfindungsgemäßen Polysiloxan reagiert. Hierzu werden in einem ersten Reaktionsschritt zunächst die Precursoren von Ver und Mod mit dem/den Katalysatoren gemischt und reagieren gelassen.

Die Reaktionsmischung liegt vorzugsweise in flüssiger Form vor. Hierzu können die Ausgangssubstanzen in einem geeigneten Lösungsmittel wie beispielsweise Butylacetat oder Toluol gelöst werden.

Die Reaktion erfolgt üblicherweise bei einer Temperatur von 10 bis 100°C, bevorzugt von 20 bis 80°C, stärker bevorzugt von 35 bis 70°C.

Die Reaktionsdauer beträgt üblicherweise 1 Stunde bis 100 Stunden, bevorzugt 5 Stunden bis 80 Stunden, stärker bevorzugt von 12 Stunden bis 72 Stunden, noch stärker bevorzugt von 24 Stunden bis 60 Stunden.

Das in diesem ersten Schritt erhaltene Zwischenprodukt wird mit den Precursoren von CL und dem/den Katalysatoren gemischt und reagieren gelassen.

Die Reaktionsmischung liegt vorzugsweise in flüssiger Form vor. Hierzu können die Ausgangssubstanzen in einem geeigneten Lösungsmittel wie beispielsweise Butylacetat oder Toluol gelöst werden.

Die Reaktion erfolgt üblicherweise bei einer Temperatur von 10 bis 100°C, bevorzugt von 20 bis 80°C, stärker bevorzugt von 35 bis 70°C.

Die Reaktionsdauer beträgt üblicherweise 1 Stunde bis 100 Stunden, bevorzugt 5 Stunden bis 80 Stunden, stärker bevorzugt von 12 Stunden bis 72 Stunden, noch stärker bevorzugt von 24 Stunden bis 60 Stunden.

Der erste Reaktionsschritt kann mehrfach wiederholt werden, bis die gewünschte Kettenlänge des Zwischenproduktes, das als Precursor für die verlängerte Verbrückungsgruppe (Ver-Mod)ₓ-Ver dient, erreicht ist.

Schließlich wird das so erhaltene Zwischenprodukt mit den Precursoren von CL und dem/den Katalysatoren gemischt und reagieren gelassen, um das erfindungsgemäße Polysiloxan zu erhalten.

Die Reaktionsmischung liegt vorzugsweise in flüssiger Form vor. Hierzu können die Ausgangssubstanzen in einem geeigneten Lösungsmittel wie beispielsweise Butylacetat oder Toluol gelöst werden.

Die Reaktion erfolgt üblicherweise bei einer Temperatur von 10 bis 100°C, bevorzugt von 20 bis 80°C, stärker bevorzugt von 35 bis 70°C.

Die Reaktionsdauer beträgt üblicherweise 1 Stunde bis 100 Stunden, bevorzugt 5 Stunden bis 80 Stunden, stärker bevorzugt von 12 Stunden bis 72 Stunden, noch stärker bevorzugt von 24 Stunden bis 60 Stunden.

Aufgrund der Quervernetzung härtet das entstehende quervernetzte Polysiloxan aus.

In einem weiteren Aspekt betrifft die vorliegende Erfindung eine Mischung, enthaltend das quervernetzte Polysiloxan wie hierin beschrieben und Füllstoffe, wie beispielsweise Partikel, Fasern, Fasermatten, Flakes, Additive, Katalysatoren und Mischungen daraus.

Geeignete Partikel sind beispielsweise Aerosil-Partikel, silberhaltige Partikel, kupferhaltige Partikel, Rußpartikel, Bornitrid-Partikel, Glaspartikel, Weichmacher wie Wachspartikel oder Ölpartikel, Partikel mit hoher Dielektrizitätszahl, Partikel mit hoher optischer Brechzahl, magnetische Partikel und farbgebende Partikel. Diese Partikel könne auch in Form von Fasern, Fasermatten oder Flakes angewendet werden.

Additive sind vorzugsweise Additive zur Adaption von Rheologie, Verarbeitbarkeit usw. Derartige Additive sind im Stand der Technik bekannt

In einer Ausführungsform besteht die Mischung aus dem quervernetzten Polysiloxan und den Füllstoffen.

In einer anderen Ausführungsform enthält die Mischung noch weitere Komponenten wie Additive und/oder weitere Polymere.

Der Gewichtsanteil der Additive in der Mischung liegt üblicherweise bei maximal 5 Gew.-%.

Der Gewichtsanteil der weiteren Polymer in der Mischung liegt üblicherweise bei maximal 25 Gew.-%.

Der Gewichtsanteil der Partikel in der Mischung liegt üblicherweise in Bereich von 0,1 bis 50 Gew.-%, bevorzugt von 0,5 bis 40 Gew.-%, stärker bevorzugt von 1 bis 30 % Gew.-%, noch stärker bevorzugt von 5 bis 20 Gew.-%.

Der Gewichtsanteil des quervernetzten Polysiloxans in der Mischung liegt üblicherweise in Bereich von 50 bis 99,9 Gew.-%, bevorzugt von 60 bis 99,5 Gew.-%, stärker bevorzugt von 70 bis 99 % Gew.-%, noch stärker bevorzugt von 80 bis 95 Gew.-%.

Die Mischung liegt vorzugsweise als Dispersion vor.

Die Partikel werden üblicherweise in die Mischung eingebracht, um die Eigenschaften des quervernetzen Polysiloxans zu verändern.

Folgende Eigenschaften lassen sich vorzugsweise durch den Einsatz von verschiedenen Partikelsystemen verändern:
- Aerosil-Partikel zur Verbesserung der Reißfestigkeit
- Silber-Nanodrähte, Rußpartikel, Kupferpartikel o.ä. zur Steigerung der elektrischen Leitfähigkeit
- Bornitrid o.ä. zur Steigerung der Wärmeleitfähigkeit
- Glasflakes o.ä. zur Verringerung der Wasserdampfdurchlässigkeit
- Weichmacher wie z.B. Wachse oder Öle
- Partikel mit hoher Dielektrizitätszahl wie BaTiOs o.ä. zur Erhöhung der dielektrischen Permittivität
- Partikel mit hohem optischen Brechungsindex wie ZrO₂ o.ä. zur Erhöhung der Brechzahl
- Magnetische Partikel wie z.B. Fe₃O₄ zur Realisierung eines magnetischen Komposits
- Farbgebende Partikel (Dekor), z.B. Fe₂O₃ oder Cu-Phthalocyanin

### Verfahren zur biobasierten Degradation quervernetzter Polysiloxane

In einem weiteren Aspekt betrifft die vorliegende Erfindung ein Verfahren zur biobasierten Degradation der quervernetzten Polysiloxane wie hierin beschrieben, enthaltend die folgenden Schritte:
- Bereitstellen eines quervernetzten Polysiloxans wie hierin beschrieben;
- Mischen des quervernetzten Polysiloxans mit einem biobasierten Agens, das das quervernetzten Polysiloxan mindestens an der Stelle der funktionellen Gruppen und/oder Heteroatome des/der einen oder mehreren organischen Verbrückungsgruppen Ver spaltet.

Alle Aspekte und Ausführungsformen der erfindungsgemäßen Polysiloxane finden hier vorzugsweise Anwendung.

Das biobasierte Agens ist vorzugsweise ausgewählt aus Mikroorganismen, vorzugsweise Bakterien, Pilzen oder Algen, oder Enzymen.

Enzyme sind vorzugsweise ausgewählt aus der Gruppe bestehend aus der Hauptklasse EC 3.-.-.- der Hydrolasen, vorzugsweise Lipasen.

Die Degradation des quervernetzten Polysiloxans erfolgt vorzugsweise in wässriger Lösung.

Die Reaktionstemperatur liegt vorzugsweise im optimalen Temperaturbereich des biobasierten Agens, bevorzugt im Bereich von 20 bis 40°C, stärker bevorzugt bei Raumtemperatur.

Ein neutraler pH-Wert der Mischung ist bevorzugt. Allerdings kann die Degradation auch in einem anderen pH-Milieu der Mischung erfolgen.

Die Degradation des quervernetzten Polysiloxans erfolgt, wenn das biobasierte Agens mindestens an der Stelle der funktionellen Gruppen und/oder Heteroatome des/der einen oder mehreren organischen Verbrückungsgruppen angreift.

Bei diesem biobasierten Agens kann es sich um ein Enzym handeln, beispielsweise um eine Lipase, die Estergruppen spaltet. Jedoch können hierzu auch andere Enzyme aus der Hauptklasse der Hydrolasen (EC 3.-.-.-; besonders EC 3.1.-.-.), Mikroorganismen, o.ä. eingesetzt werden. Die Enzyme stammen bevorzugt aus Mikroorganismen wie Bakterien oder (Hefe-)Pilzen. Wesentlich ist auch, dass der Abbau "getriggert" erfolgt, d.h. erst, wenn die zum Abbau erforderlichen Bedingungen bewusst geschaffen werden.

In dem erfindungsgemäßen Verfahren wird das das Polymer-Netzwerk an bestimmten Stellen gezielt aufgebrochen. Die so erhaltenen Abbauprodukte können dann weitestgehend zurückgewonnen werden.

Ebenfalls lässt sich durch das erfindungsgemäße Verfahren auch der Katalysator, welcher vorzugsweise aus Edelmetallverbindungen besteht, zurückgewinnen.

Ziel des erfindungsgemäßen Verfahrens ist es, die zurückgewonnenen Polysiloxankomponenten sowie ggf. auch den Katalysator in einen erneuten Syntheseprozess zurückzuführen.

Das erfindungsgemäße Verfahren lässt sich auch auf die Partikel enthaltenden Mischungen wie hierin beschrieben anwenden.

### Verwendung

In einem weiteren Aspekt betrifft die vorliegende Erfindung die Verwendung von einer oder mehreren organischen Verbrückungsgruppen Ver, deren Precursor(en) eine oder mehrere nicht-endständige funktionelle Gruppen und/oder Heteroatome und mindestens zwei endständige funktionelle Gruppen enthalten, in dem quervernetzten Polysiloxan wie hierin beschrieben zur biobasierten Degradation des quervernetzten Polysiloxans mittels eines biobasierten Agens, wie Mikroorganismen, vorzugsweise Bakterien, Pilzen oder Algen, oder Enzymen außerhalb lebender Organismen.

Vorzugsweise finden alle Aspekte und Ausführungsformen von Ver, dem quervernetzten Polysiloxan und des Verfahrens zur biobasierten Degradation wie hierin beschrieben bei der erfindungsgemäßen Verwendung Anwendung.

Weiterhin betrifft die vorliegende Erfindung die Verwendung Anwendungen der quervernetzten Polysiloxane und der Mischung wie hierin beschrieben für industrielle Anwendungen, wie in der chemischen Industrie, Kautschuk- und Kunststoffindustrie, Bauindustrie, Automobilsektor, Elektro- und Elektronikindustrie, Papierindustrie, und anderen.

Vorzugsweise finden alle Aspekte und Ausführungsformen von den quervernetzten Polysiloxanen und der Mischung wie hierin beschrieben bei der erfindungsgemäßen Verwendung Anwendung.

Die vorliegende Erfindung wird im Weiteren durch die folgenden nicht einschränkenden Beispiele illustriert:

### Beispiele

### Beispiel 1: Herstellung eines biologisch abbaubaren Silicons

Die Einzelkomponenten Hydrogenpolydimethylsiloxan (CL 120, Firma Evonik Industries; 2,36 g, 1,18 mmol/g Si-H), endständiges Dihydrogenpolydimethylsiloxan (Mod 705, SiH-terminiertes PDMS, Firma Evonik Industries; 6,25 g, 0,16 mmol/g Si-H), Phthalsäurediallylester (Firma Sigma Aldrich; 0,25 g, 2,0 mmol) und Butylacetat (0,5 g, 4,3 mmol) sowie Aerosil R 8200 als Verstärkungsmittel (Firma Evonik Industries; 1,79 g; 20 Gew.-%) werden in einen Speedmixbecher gegeben und im SpeedMixer^{™} (SpeedMixer^{™} DAC 400.1 VAC-P) bei 2500 U/min für 1 Minute homogenisiert. Anschließend wird in das Gemisch 0,01 g Ashby-Katalysator (Firma ABCR; 0,35 % in cyclischem Methylvinylsiloxan) gegeben und im SpeedMixer^{™} (SpeedMixer^{™} DAC 400.1 VAC-P) bei 2000 U/min für 30 Sekunden homogenisiert. Das Gemisch wird anschließend im Ofen bei 60 °C bis zu 48 Stunden gehärtet.

### Beispiel 2: Herstellung eines biobasierten, biologisch abbaubaren Silicons

Der Precursor Undec-10-en-1-yl-undec-10-enoat wird in Anlehnung an Lebarbé et al. 2014. Macromolecular rapid communications, 35(4), 479-483. aus 10-Undecensäure-methylester (Firma Sigma Aldrich; 15,00 g; 75,6 mmol) und 10-Undecen-1-ol (Firma Sigma Aldrich; 12,87 g; 75,6 mmol) mit TBD (Firma Sigma Aldrich; 1,5,7-Triazabicyclo[4.4.0]dec-5-en; 0,53 g; 3,78 mmol) als Umesterungs-Katalysator erhalten.

Alternativ kann die Darstellung in Anlehnung an Le et al. 2019. RSC Advances, 9(18), 10245-10252 aus 10-Undecenoylchlorid (Firma Sigma Aldrich; 3,04 g; 15 mmol), 10-Undecen-1-ol (Firma Sigma Aldrich; 2,55 g; 15 mmol) und Triethylamin (Firma Sigma Aldrich; 2,51 mL; 18 mmol) erfolgen.

Die Einzelkomponenten Hydrogenpolydimethylsiloxan (CL 120, Firma Evonik Industries; 2,36 g, 1,18 mmol/g Si-H), endständiges Dihydrogenpolydimethylsiloxan (AB109364, SiH-terminiertes PDMS, Firma ABCR; 0,36 g, 0,16 mmol/g Si-H), Undec-10-en-1-yl-undec-10-enoat (0,34 g, 2,0 mmol), Butylacetat (0,2 g, 1,72 mmol) sowie Aerosil R 8200 als Verstärkungsmittel (Firma Evonik Industries; 0,61 g; 20 Gew.-%) werden in einen Speedmixbecher gegeben und im SpeedMixer^{™} (SpeedMixer^{™} DAC 400.1 VAC-P) bei 2500 U/min für 1 Minute homogenisiert. Anschließend wird in das Gemisch 0,01 g Ashby-Katalysator (Firma ABCR; 0,35 % in cyclischem Methylvinylsiloxan) gegeben und im SpeedMixer^{™} (SpeedMixer^{™} DAC 400.1 VAC-P) bei 2000 U/min für 30 Sekunden homogenisiert. Das Gemisch wird anschließend im Ofen bei 60 °C bis zu 48 Stunden gehärtet.

### Beispiel 3: Herstellung eines biologisch abbaubaren Silicons mit längeren Netzbögen

Schritt 1: Herstellung des Precursors für einen Netzbogen (Ver-Mod)ₓ-Ver (x = 1) Die Einzelkomponenten Phthalsäurediallylester (Firma Sigma Aldrich; 0,25 g; 2 mmol) und endständiges Dihydrogenpolydimethylsiloxan (AB 109364, SiH-terminiertes PDMS, Firma ABCR; 0,36 g, 0,16 mmol/g Si-H) sowie Butylacetat (0,2 g; 1,72 mmol) werden mit 0,01 g Ashby-Katalysator (Firma ABCR; 0,35 % in cyclischem Methylvinylsiloxan) versetzt und im SpeedMixer^{™} (SpeedMixer^{™} DAC 400.1 VAC-P) bei 2000 U/min für 1 Minute homogenisiert. Das Gemisch wird anschließend im Ofen bei 60 °C bis zu 48 Stunden zur Reaktion gebracht, bis eine hochviskosere Flüssigkeit entsteht.

### Schritt 2: Verknüpfung des Precursors des Netzbogens (Ver-Mod)ₓ-Ver (x = 1) mit Crosslinker

Der in Schritt 1 gewonnene Netzbogen (0,61 g; 1,0 mmol) wird mit Hydrogenpolydimethylsiloxan (CL 120, Firma Evonik Industries; 2,36 g, 1,18 mmol/g Si-H) und 0,01 g Ashby-Katalysator (Firma ABCR; 0,35 % in cyclischem Methylvinylsiloxan) in einen Speedmixbecher gegeben und im SpeedMixer^{™} (SpeedMixer^{™} DAC 400.1 VAC-P) bei 2000 U/min für 1 Minute homogenisiert. Das Gemisch wird anschließend im Ofen bei 60 °C bis zu 48 Stunden gehärtet.

### Beispiel 4: Herstellung von Precursoren für Netzbögen (Ver-Mod)ₓ-Ver (x = 1 - 20) einstellbarer Länge

Der nach Schritt 1, Beispiel 3 hergestellte Netzbogen-Precursor (0,61 g; 1,0 mmol) wird mit dem endständiges Dihydrogenpolydimethylsiloxan (AB109364, SiH-terminiertes PDMS, Firma ABCR; 0,73 g, 2,57 mmol/g Si-H) und 0,01 g Ashby-Katalysator (Firma ABCR; 0,35 % in cyclischem Methylvinylsiloxan) in einen Speedmixbecher gegeben und im SpeedMixer^{™} (SpeedMixer^{™} DAC 400.1 VAC-P) bei 2000 U/min für 1 Minute homogenisiert. Das Gemisch wird anschließend im Ofen bei 60 °C bis zu 48 Stunden zur Reaktion gebracht, bis eine hochviskosere Flüssigkeit entsteht.

Das so gewonnene Produkt (1,34 g; 1,0 mmol) wird mit Phthalsäurediallylester (Firma Sigma Aldrich; 0,25 g, 2,0 mmol) und 0,01 g Ashby-Katalysator (Firma ABCR; 0,35 % in cyclischem Methylvinylsiloxan) in einen Speedmixbecher gegeben und im SpeedMixer^{™} (SpeedMixer^{™} DAC 400.1 VAC-P) bei 2000 U/min für 1 Minute homogenisiert. Das Gemisch wird anschließend im Ofen bei 60 °C bis zu 48 Stunden zur Reaktion gebracht, bis eine hochviskosere Flüssigkeit entsteht.

Durch Wiederholung dieser beiden Reaktionsschritte können Precursoren für Netzbögen definierter Länge hergestellt werden.

### Beispiel 5: Biobasierte Degradation eines quervernetzen Polysiloxans mittels Enzymen

Die zu untersuchende Probe (hergestellt nach Beispielen 1 und 2, jedoch ohne Aerosil-Verstärkungsmittel) wird mittels einer Mühle (PULVERISETTE 7 premium line) mittels Achat-SiO₂-Mahlkugeln von 10 mm Durchmesser zu einem möglichst feinen Pulver gemahlen.

Eine definierte Masse der zur untersuchenden Probe wird in Pulverform in ein verschließbares Kunststoffgefäß gegeben. Es wird ein definiertes Volumen an Phosphat-Pufferlösung (pH = 7,2; Gate Scientific Inc. (2021). Recipes for Phosphate Buffered Saline (PBS). Aufgerufen am 05.04.2022, von https://gatescientific.com/technique-geeks-blog/f/recipes-for-phosphate-bufferedsaline-pbs) sowie eine 3%igen Lipase-Lösung (Firma Sigma Aldrich; Lipase aus Schweinepankreas, Type II, EC-Nummer: 3.1.1.3), die zuvor in einem separaten Kunststoffgefäß hergestellt wurde, hinzugegeben. Mit 0,01 M NatriumcarbonatLösung (Firma Sigma Aldrich; 0,11 g Natriumcarbonat in 100 mL bidestilliertem Wasser) wird der pH-Wert auf 7,2 bis 7,4 eingestellt. Das verschlossene Kunststoffgefäß mit dem Gemisch wird bei 30 °C inkubiert. Zu Beginn des Abbautests schwimmt das Pulver auf der wässrigen Lösung (schlechte Benetzung). Nach wenigen Tagen entsteht eine Suspension, d.h. das Pulver verteilt sich gleichmäßig in der ganzen Lösung. Nach weiteren Tagen und Wochen kann eine Abnahme der Pulvermenge in der Lösung beobachtet werden. Dies kann zudem gravimetrisch verfolgt werden und die Rückstände und Filtrate mit geeigneten Charakterisierungsmethoden auf den Abbau untersucht werden.

## Patentansprüche

1. Quervernetzte Polysiloxane enthaltend folgendes allgemeines Strukturmerkmal 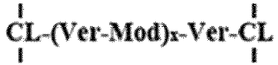 wobei
CL eine sog. "Crosslinker"-Einheit ist, die eine Polysiloxankette mit der Grundstruktur nach Formel (I) 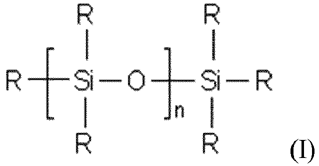 oder einen Polysiloxanring mit der Grundstruktur nach Formel (II) 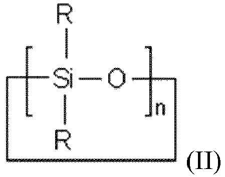
enthält, wobei
R unabhängig voneinander ausgewählt ist aus einem linearen, zyklischen oder verzweigten, aliphatischen oder aromatischen, gesättigten oder ungesättigten Kohlenwasserstoffrest mit 1 bis 20 C-Atomen, der gegebenenfalls Heteroatome ausgewählt aus O, N, S oder P enthält, -H oder -O-R`,
R' eine Polysiloxankette oder ein Polysiloxanring mit der Grundstruktur nach Formel (I) bzw. Formel (II) ist, und
n im Falle von Polysiloxanketten nach Formel (I) ein Zahlenwert von 0 bis 1000000, im Falle von Polysiloxanringen nach Formel (II) ein Zahlenwert von 2 bis 1000000 ist, und der Precursor jeder CL-Einheit drei oder mehr funktionelle Gruppen enthält, die kovalente Bindungen mit endständigen funktionellen Gruppen von Precursoren von Verbrückungsgruppen Ver ausbildet;
Ver eine organische Verbrückungsgruppe ist, deren Precursor(en) funktionelle Gruppen und/oder Heteroatome sowie mindestens zwei endständige funktionelle Gruppen enthalten, wobei die mindestens zwei endständigen funktionellen Gruppen mit je einer funktionellen Gruppe eines Crosslinker-Precursors oder einer funktionellen Gruppe eines Modifier-Precursors, falls vorhanden, jeweils eine kovalente Bindung ausbildet;
Mod eine oder mehrere Modifier-Gruppe ist, deren Precursor(en) Siloxane oder Polysiloxane sind, die zwei endständige funktionelle Gruppen enthalten, die mit je einer endständigen funktionellen Gruppe der Verbrücker-Precursor(en) jeweils eine kovalente Bindung ausbilden; und
x ein Zahlenwert von 0 bis 20 ist.

2. Die quervernetzten Polysiloxane gemäß Anspruch 1, wobei die Polysiloxankette gemäß Formel (I) der Crosslinker-Einheiten CL ausgewählt ist aus der Gruppe bestehend aus Polydimethylsiloxan (PDMS), endständiges Dihydrogenpolydimethylsiloxan und/oder Hydrogenpolydimethylsiloxane mit Seitengruppen R = -H., und/oder die ein oder mehreren reaktiven Gruppen der Precursoren für die Crosslinker-Einheiten CL ausgewählt ist/sind aus der Gruppe bestehend aus -Si-H-Gruppen, Hydroxy-Gruppen, Alkoxy-Gruppen, Carboxy-Gruppen, Epoxid-Gruppen, Isocyanat-Gruppen und Oxim-Gruppen.

3. Die quervernetzten Polysiloxane gemäß Anspruch 1 oder 2, wobei im Precursor des/der organischen Verbrückungsgruppe Ver die nicht-endständigen funktionellen Gruppen ausgewählt sind aus der Gruppe bestehend aus Estern, Iminen, Ethern, Thioethern, Ketonen, Amiden, Urethanen, Thiourethanen und Glykosiden, die Heteroatome ausgewählt sind aus der Gruppe bestehend aus Sauerstoff, Stickstoff, Schwefel und Phosphor und die endständigen funktionellen Gruppen unabhängig voneinander ausgewählt sind aus der Gruppe bestehend aus linearen oder verzweigten ungesättigten Kohlenwasserstoffgruppen mit 2 bis 10 C-Atomen und endständiger C=C-Doppelbindung, Alkoxy-Gruppen, Carboxy-Gruppen und Oxim-Gruppen.

4. Die quervernetzten Polysiloxane gemäß einem der vorherigen Ansprüche, wobei der/die Precursor(en) des/der Verbrückungsgruppen Ver ein biobasiert, naturstoffbasiert oder auch synthetisch sind.

5. Die quervernetzten Polysiloxane gemäß einem der vorherigen Ansprüche, wobei im/in den Precursor(en) des/der die Modifier-Gruppen Mod die endständigen funktionellen Gruppen ausgewählt sind aus der Gruppe bestehend aus Si-H-Gruppen, Hydroxy-Gruppen, Alkoxy-Gruppen, Carboxy-Gruppen, Epoxid-Gruppen, Isocyanat-Gruppen und Oxim-Gruppen.

6. Verfahren zur Herstellung der quervernetzten Polysiloxane gemäß einem der vorherigen Ansprüche enthaltend die folgenden Schritte:
• Bereitstellen eines oder mehrerer Polysiloxane mit Polysiloxanketten oder Polysiloxanringen, welche als Crosslinker-Einheit CL fungieren, mit der Grundstruktur nach Formel (I) bzw. Formel (II);
• Bereitstellen eines oder mehrerer Precursoren des/der organischen Verbrückungsgruppen Ver;
• Optional Bereitstellen eines oder mehrerer Precursoren des/der Modifier-Gruppen Mod;
• Optional kovalente Verknüpfung einer endständigen funktionellen Gruppe von einem oder mehreren Precursoren von Ver mit einer funktionellen Gruppe von einem oder mehreren Precursoren von Mod in der Gegenwart eines Katalysators oder mehrerer Katalysatoren und optional in Gegenwart eines oder mehrere Inhibitoren zur Herstellung der optionalen Struktur (Ver-Mod)ₓ-Ver;
• Kovalente Verknüpfung von jeweils einer funktionellen Gruppe der Precursor(en) der Crosslinker-Einheit CL, mit je einer endständigen funktionellen Gruppen der Precursor(en) von Ver und/oder optional von (Ver-Mod)ₓ-Ver in der Gegenwart eines Katalysators oder mehrerer Katalysatoren und optional in Gegenwart eines oder mehrerer Inhibitoren.

7. Das Verfahren gemäß Anspruch 6, wobei der/die Katalysator(en) ausgewählt ist/sind aus Katalysatoren für Hydrosilyierungsreaktionen, Katalysatoren für Kondensationsreaktionen von Alkoxy-haltigen Polysiloxanen, Katalysatoren für Kondensationsreaktionen von Carboxy-haltigen Polysiloxanen und Katalysatoren für Kondensationsreaktionen von Oxim-haltigen Polysiloxanen, bevorzugt Edelmetallkatalysatoren, stärker bevorzugt Platinkatalysatoren.

8. Mischung enthaltend die quervernetzten Polysiloxane gemäß einem der vorherigen Ansprüche und Füllstoffe, wie beispielsweise Partikel, Fasern, Fasermatten, Flakes, Additive, Katalysatoren und Mischungen daraus.

9. Verfahren zur biobasierten Degradation der quervernetzten Polysiloxane gemäß einem der Ansprüche 1 bis 7 enthaltend folgende Schritte:
• Bereitstellen eines quervernetzten Polysiloxan gemäß einem der Ansprüche 1 bis 7;
• Mischen des quervernetzten Polysiloxans mit einem biobasierten Agens, das das quervernetzte Polysiloxan mindestens an der Stelle der funktionellen Gruppen und/oder Heteroatome des/der ein oder mehreren organischen Verbrückungsgruppen Ver spaltet.

10. Das Verfahren gemäß Anspruch 9, wobei das biobasierte Agens ausgewählt ist aus Mikroorganismen, vorzugsweise Bakterien, Pilzen oder Algen, oder Enzymen, wobei die Enzyme vorzugsweise ausgewählt sind aus der Gruppe bestehend aus der Hauptklasse EC 3.-.-.- der Hydrolasen, vorzugsweise Lipasen.

11. Verwendung von einer oder mehreren organischen Verbrückungsgruppen Ver, deren Precursor(en) eine oder mehrere nicht-endständige funktionelle Gruppen und/oder Heteroatome und mindestens zwei endständige funktionelle Gruppen enthalten, in dem quervernetzten Polysiloxan gemäß der Ansprüche 1 bis 7 zur biobasierten Degradation des quervernetzten Polysiloxans mittels eines biobasierten Agens, wie Mikroorganismen, vorzugsweise Bakterien, Pilzen oder Algen, oder Enzymen außerhalb lebender Organismen.

12. Verwendung der quervernetzen Polysiloxane gemäß einem der Ansprüche 1 bis 7 und der Mischung gemäß Anspruch 8 für industrielle Anwendungen, wie in der chemischen Industrie, Kautschuk- und Kunststoffindustrie, Bauindustrie, Automobilsektor, Elektro- und Elektronikindustrie, Papierindustrie, und anderen.
